# EUROPÄISCHE PATENTSCHRIFT

(11) **EP 2 886 588 B1**
(45) Veröffentlichungstag und Bekanntmachung des Hinweises auf die Patenterteilung: **20.03.2019**
(21) Anmeldenummer: 13199386.7
(22) Anmeldetag: 23.12.2013
(51) Int. Cl.: C08J 5/18, C08L 25/04, C08L 53/02, B32B 5/02, B32B 27/32

(54) **Elastische Monofolie sowie Verfahren zur Herstellung eines Laminates für Einweg-Hygieneprodukte**
Elastic monofilm and method for production of a laminate for disposable hygiene products
Monofeuille élastique et procédé de fabrication d'un laminé pour des produits d'hygiène à usage unique

(43) Veröffentlichungstag der Anmeldung: 24.06.2015
(73) Patentinhaber: Mondi Gronau GmbH, 48599 Gronau (DE)
(72) Erfinder: Sollmann, Henner, 48599 Gronau (DE)
(74) Vertreter: Lorenz, Bernd Ingo Thaddeus

(56) Entgegenhaltungen:
- EP-A1- 2 602 282

## Beschreibung

Die vorliegende Erfindung betrifft eine elastische Monofolie mit einer Foliendicke zwischen 20 µm und 100 µm, mit einem asymmetrischen Styrol-Dien-Dreiblockcopolymer mit einem Anteil zwischen 35 Gew.-% und 90 Gew.-% als erster Polymersubstanz A und mit einer zweiten Polymersubstanz B.

Elastische Monofolien auf der Basis von Styrol-Blockcopolymeren werden in der Praxis häufig für elastische Laminate eingesetzt, aus denen elastische Abschnitte, beispielsweise Windelohren oder elastische Verschlussbänder von Windeln, insbesondere Babywindeln gebildet werden.

Bei einer elastischen Monofolie ist zu beachten, dass diese, insbesondere bei dem Einsatz an einem Wegwerfartikel, möglichst dünn und damit kostengünstig sein soll, während andererseits auch eine ausreichende Belastbarkeit und Höchstzugkraft gewährleistet werden müssen.

Einander gegenläufige Anforderungen an eine solche Monofolie sind auch die Vorgaben, dass einerseits ein daraus gebildetes elastisches Element möglichst gleichmäßig und zu Beginn des Dehnungsvorganges leicht dehnbar sein soll, während die Monofolie andererseits für ihre Verarbeitung eine ausreichende Zugfestigkeit aufweisen muss. So muss verhindert werden, dass die Folie sich bei der Handhabung übermäßig dehnt oder sogar zerreißt.

In einem gewissen Maße kann dabei ausgenutzt werden, dass ausgehend von einer Produktionsrichtung der Folie das Dehnungsverhalten in Produktionsrichtung (machine direction-MD) und senkrecht dazu in Querrichtung (cross direction-CD) unterschiedlich ist. Die Monofolien werden insbesondere derart zu Laminaten und später zu einzelnen Verbundstoffelementen verarbeitet, dass an dem fertigen Produkt eine Dehnung in Querrichtung (CD) erfolgt.

Aus der EP 2 602 282 A1 ist eine elastische Folie für den Windelbereich, insbesondere für elastische Windelverschlusselemente bekannt. Die elastische Folie weist eine durch Extrusion einer Polymerzusammensetzung hergestellte Schicht auf, wobei die Polymerzusammensetzung eine Mischung eines Styrol-Blockcopolymers und eines Weichmachers aufweist. Um die mit Deckschichten versehene Folie leicht dehnen zu können ist eine Aktivierung vorgesehen.

Die bekannten Monofolien auf der Basis von Styrol-Blockcopolymer sind häufig aus symmetrischen Dreiblockcopolymeren wie Styrol-Isopren-Styrol-Copolymer oder Styrol-Butadien-Styrol-Copolymer gebildet.

Eine gattungsgemäße elastische Monofolie mit einem asymmetrischen Styrol-Dien-Dreiblockcopolymer mit einem Anteil zwischen 35 Gew.-% und 90 Gew.-% als erster Polymersubstanz und mit einer zweiten Polymersubstanz ist aus der EP 2 264 101 A1 bekannt. Die zweite Polymersubstanz ist ebenfalls ein Styrol-Dien-Dreiblockcopolymer, welches jedoch einen symmetrischen oder zumindest weniger asymmetrischen Blockaufbau aufweist.

Die Folie besteht damit aus Styrol-Dien-Dreiblockcopolymer, wobei unterschiedliche Dreiblockcopolymere bereitgehalten und miteinander gemischt werden müssen.

Vor diesem Hintergrund liegt der vorliegenden Erfindung die Aufgabe zugrunde eine elastische Monofolie anzugeben, welche sich bei einer möglichst geringen Dicke durch eine für die Verarbeitung ausreichende Zugfestigkeit in einer Herstellungsrichtung und gut elastische Eigenschaften quer dazu auszeichnet. Gegenstand der Erfindung und Lösung der Aufgabe sind eine elastische Monofolie gemäß Patentanspruch 1 sowie ein Verfahren zur Herstellung eines Laminates für ein Einweg-Hygieneprodukt gemäß Patentanspruch 7.

Ausgehend von einer elastischen Monofolie mit den eingangs beschriebenen Merkmalen ist erfindungsgemäß vorgesehen, dass als zweite Polymersubstanz B Polystyrol mit einem Anteil zwischen 8 Gew.-% und 40 Gew.-%, besonders bevorzugt mit einem Anteil zwischen 10 Gew.-% und 20 Gew.-% vorgesehen ist und dass das Verhältnis der Polymersubstanz A zu der Polymersubstanz B in einem Bereich zwischen 3:1 und 6:1 liegt.

Erfindungsgemäß wird also ein asymmetrisches Styrol-Dien-Dreiblockcopolymer, vorzugsweise ein Styrol-Isopren-Styrol-Blockcopolymer mit einem einfachen Polystyrol gemischt, um eine Folie zu bilden, welche einerseits in einer Herstellungsrichtung eine ausreichende Zugfestigkeit sowie Stabilität und quer dazu eine gute Dehnbarkeit aufweist.

Demnach weist die erfindungsgemäße elastische Monofolie eine ausgeprägte Anisotropie auf, welche hinsichtlich der Verarbeitung der Monofolie und des Einsatzes als elastische Schicht eines Laminates für Einweg-Hygieneprodukte von Vorteil ist. Es ist bekannt, dass bei Styrol-Dien-Dreiblockcopolymeren die Styrol-Endblöcke eine gewisse Stabilisierung bewirken, während der Dien-Zwischenblock eine elastische Dehnung ermöglicht. Dabei wird beobachtet, dass auf einer mikroskopischen Skala eine phasenseparierte Struktur entstehen kann, so dass sich eine Art Gitter oder Netz mit steifen und elastischen Bereichen bildet.

Vor diesem Hintergrund beschreibt die EP 2 264 101 A1, dass symmetrische Styrol-Dien-Dreiblockcopolymere und asymmetrische Styrol-Dien-Dreiblockcopolymere als Bestandteile einer Monofolie zur Veränderung bzw. Einstellung der elastischen Eigenschaften genutzt werden können.

Als asymmetrisch werden im Rahmen der Erfindung Styrol-Dien-Dreiblockcopolymere bezeichnet, deren Endblöcke ein Massenverhältnis von zumindest 1,5:1 und vorzugweise zumindest 2:1 aufweisen. Das Massenverhältnis kann beispielsweise auch ein Verhältnis von 5:1 oder mehr betragen.

Im Rahmen der Erfindung beträgt der Anteil zumindest 30 Gew.-%. Vorzugsweise ist das Styrol-Dien-Dreiblockcopolymer als Polymersubstanz A der Hauptbestandteil der elastischen Folie, so dass dann die Polymersubstanz A mit einem Anteil von zumindest 50 Gew.-% in der Monofolie enthalten ist. Darüber hinaus ist aber auch stets ein Anteil von zumindest 8 Gew.-% von Polystyrol als zweiter Polymersubstanz B enthalten. Der angegebene Anteil zwischen 8 Gew.-% und 40 Gew.-%, vorzugsweise zwischen 10 Gew.-% und 20 Gew.-% hat sich als zweckmäßig herausgestellt, um einerseits das an sich sehr leicht dehnbare asymmetrische Styrol-Dien-Dreiblockcopolymer zu verstärken und zu versteifen, ohne dass jedoch die elastischen Eigenschaften übermäßig beeinträchtigt werden. Darüber hinaus ist zu beachten, dass Polystyrol als Polymersubstanz B kostengünstiger als das asymmetrische Styrol-Dien-Dreiblockcopolymer ist, wodurch sich durch den Einsatz von Polystyrol Kostenersparnisse ergeben. Dies gilt insbesondere im Vergleich zu der aus EP 2 264 101 A1 bekannten Ausgestaltung einer Monofolie, bei der zwei Styrol-Dien-Dreiblockcopolymere miteinander gemischt sind.

Die Monofolie wird vorzugweise durch Cast-Folienextrusion gebildet, wobei das Polymergemisch von einem Extruder durch einen Extrusionsschlitz einer Breitschlitzdüse extrudiert wird.

Durch eine geeignete Mischung der Polymersubstanz A und der Polymersubstanz B kann in der Monofolie eine mikrophasenseparierte Struktur mit entlang einer Produktionsrichtung ausgerichteten, versteiften Domänen erzeugt werden. Einzelne, im Wesentlichen von der Polymersubstanz B und den Endblöcken der Polymersubstanz A gebildete versteifte Domänen können beispielsweise zylinder- bzw. filamentförmig sein. Durch solche in Produktionsrichtung verlaufende zylinder- oder filamentförmige Domänen kann in Produktionsrichtung eine vergleichsweise hohe Zugfestigkeit erreicht werden, wodurch die Monofolie gut verarbeitet werden kann. In Querrichtung wirken sich diese Domänen allerdings nur vergleichweise wenig aus, so dass die elastische Monofolie in Querrichtung CD gut dehnbar bleibt. Es ergibt sich also der Vorteil einer ausgeprägten und im Rahmen der Erfindung gewünschten Asymmetrie des Dehnungsverhaltens.

Um die mechanischen Eigenschaften der Monofolie, die Verarbeitbarkeit, die Farbe, die UV-Stabilität oder weitere spezifische Eigenschaften der Monofolie verändern zu können, kann neben der ersten Polymersubstanz A und der zweiten Polymersubstanz B zumindest ein zusätzlicher Bestandteil ausgewählt aus der Gruppe Polyethylen (PE), Ethylen-Vinylacetat (EVA) Antiblockmittel, Farbpigmente, Thermostabilisatoren, UV-Absorber und Verarbeitungshilfsmittel vorhanden sein.

Die Polymersubstanz A, vorzugsweise also Styrol-Isopren-Styrol-Blockcopolymer als asymmetrisches Styrol-Dien-Dreiblockcopolymer, weist bevorzugt einen Schmelzindex MFI 200°C/5 kg gemäß ISO 1133 zwischen 10 und 50 auf.

Die elastische Monofolie kann insbesondere für die kostengünstige Herstellung eines Laminates für ein Einweg-Hygieneprodukt eingesetzt werden. Die Monofolie kann beispielsweise gegen ein Nonwoven kaschiert werden, wobei dann abhängig von der Art der Kaschierung und den mechanischen Eigenschaften des Nonwovens optional eine Aktivierung in Querrichtung (CD) vorgesehen sein kann. Bei einer Aktivierung wird das Laminat vor einer erstmaligen Benutzung, beispielsweise durch Ringrollen oder einen Streckrahmen gedehnt und dann entspannt. Je nach Ausführung kann jedoch auf eine solche Aktivierung verzichtet werden, insbesondere wenn das Nonwoven-Material auch ohne eine Aktivierung des Laminates ausreichend leicht dehnbar ist.

Gegenstand der Erfindung ist auch ein Verfahren zur Herstellung eines Laminates für Einweg-Hygieneprodukte, insbesondere für eine Windel, mit einer elastischen Monofolie und zumindest einer Deckschicht aus Nonwoven, wobei in einem Extruder eine Polymermischung plastifiziert wird, welche zumindest ein asymmetrisches Styrol-Dien-Dreiblockcopolymer mit einem Anteil zwischen 30 Gew.-% und 90 Gew.-% als erste Polymersubstanz A und Polystyrol mit einem Anteil zwischen 8 Gew.-% und 40 Gew.-% als zweite Polymersubstanz B aufweist, wobei die Polymermischung zur Bildung einer Monofolie durch eine Breitschlitzdüse extrudiert wird und wobei die Monofolie mit zumindest einer Nonwovenschicht kaschiert wird.

Das Laminat wird vorzugsweise derart geschnitten und an der Windel appliziert, dass der gebildete Abschnitt bezogen auf die Herstellung der Monofolie in Querrichtung dehnbar ist. Das elastische Laminat kann beispielsweise zur Bildung elastischer Windelohren oder elastischer Verschlussstreifen für einen Klettverschluss oder auch elastische Seitenteile einer Trainingswindel eingesetzt werden.

Optional ist bei dem Verfahren eine Aktivierung des Laminates vor der Bildung der Windel vorgesehen.

Die mechanischen Eigenschaften bei einer Mischung von Polystyrol mit einem symmetrischen Styrol-Dien-Dreiblockcopolymer einerseits und der Mischung von Styrol mit einem asymmetrischen Styrol-Dien-Dreiblockcopolymer unterscheiden sich wesentlich, so dass die bei der erfindungsgemäßen Ausgestaltung der Monofolie resultierenden mechanischen Eigenschaften überraschend sind.

Die Erfindung wird nachfolgend anhand von Figuren weiter erläutert. Es zeigen:
- Fig. 1: einen Vergleich der für eine Dehnung um 1% notwendigen Kraft für unterschiedliche Monofolien,
- Fig. 2a bis 3c: Dehnungsdiagramme für unterschiedliche Monofolien.

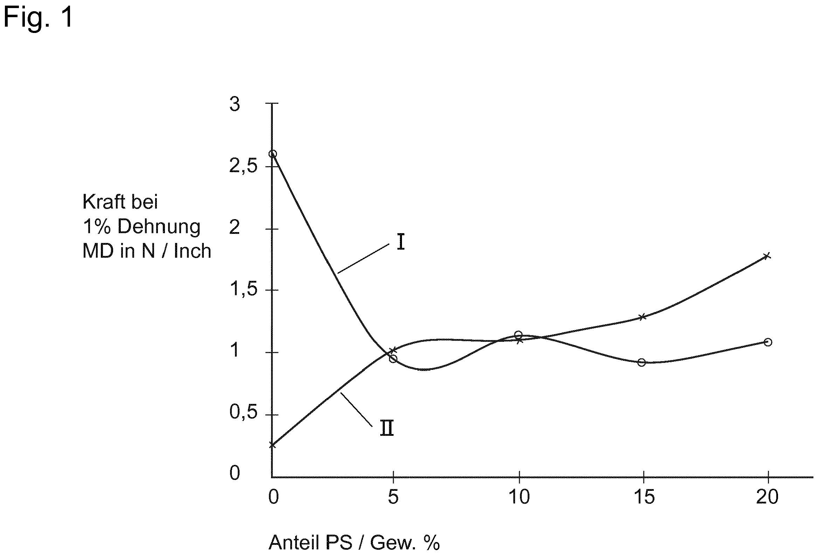

In der Fig. 1 ist in relativen Einheiten die Kraft für 1% Dehnung einer Monofolie in Abhängigkeit des Anteils von Polystyrol als Polymersubstanz B in Gew.-% angegeben. Die Kurve I zeigt den Verlauf einer nicht von der Erfindung umfassten Monofolie, welche aus einer Mischung eines symmetrischen Styrol-Isopren-Styrol-Blockcopolymer und Polystyrol gebildet ist. Eine gewisse Menge an Polystyrol ist notwendig, um die Fliesfähigkeit der Mischung zu verbessern. Außerdem sinken die Rohstoffkosten der Mischung grundsätzlich mit zunehmendem Anteil an Polystyrol. Mit der Zumischung von Polystyrol nimmt die Steifigkeit zunächst ab und bleibt dann ab einem Anteil von etwa 6 Gew.-% relativ stabil.

Die Kurve II zeigt dagegen das Dehnungsverhalten einer Monofolie, die aus einem asymmetrischen Styrol-Isopren-Styrol-Blockcopolymer und Polystyrol gebildet ist. Die so gebildete Monofolie hat zunächst eine deutlich niedrigere Steifigkeit, welche jedoch durch die Zugabe von Polystyrol kontinuierlich ansteigt. Bei einem Anteil von zumindest 10 Gew.-% Polystyrol wird trotz einer zunächst geringeren Grundsteifigkeit ein höheres Niveau als bei der Kurve I erreicht.

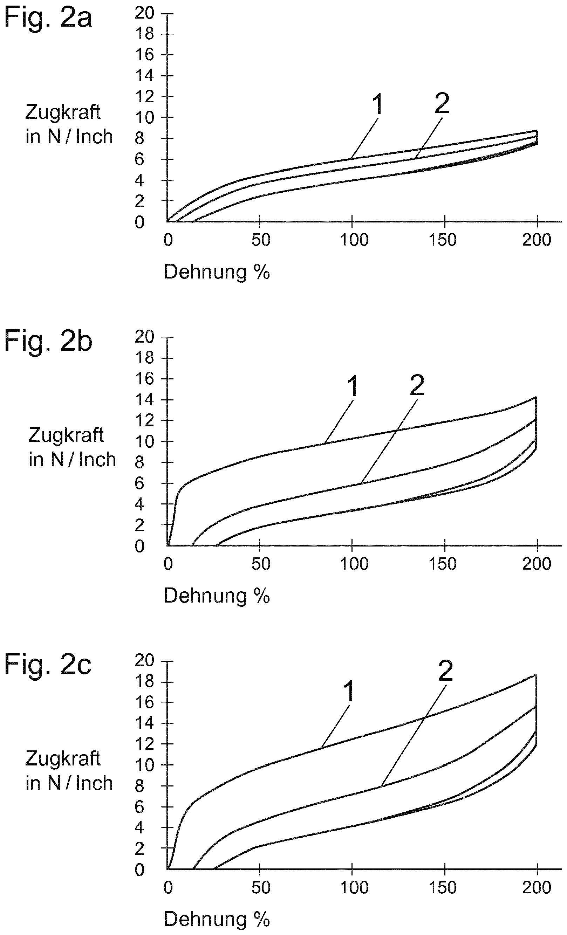

Die Figuren 2a bis 2c zeigen in relativen Einheiten das Dehnungsverhalten einer auf der Basis von asymmetrischen Styrol-Isopren-Styrol-Blockcopolymer gebildeten Monofolien für eine Dehnung in Maschinenrichtung (MD). Die Fig. 2a zeigt dabei das Dehnungsverhalten bei einem Polystyrol-Anteil von 0%, so dass die Fig. 2a damit ein Vergleichsbeispiel betrifft.

Gemäß der Fig. 2a weist eine Monofolie mit einem asymmetrischen Styrol-Isopren-Styrol-Blockcopolymer ohne eine Zumischung von Polystyrol in Maschinenrichtung nur eine geringe Steifigkeit auf und kann so nicht oder nur mit einem erheblichen Aufwand verarbeitet werden. Das Dehnungsdiagramm zeigt den typischen Verlauf für eine erstmalige Dehnung 1 und einer nachfolgenden zweiten Dehnung 2 mit einer jeweils darauf folgenden Entspannung der Monofolie.

Die Figuren 2b und 2c zeigen eine erfindungsgemäße Ausgestaltung der Monofolie mit einem Anteil an Polystyrol von 10 Gew.-% (Fig. 2b) und 20 Gew.-% (Fig. 2c). Es ist zu erkennen, dass die Folie in der Maschinenrichtung MD deutlich steifer ist und so auch gut verarbeitet werden kann.

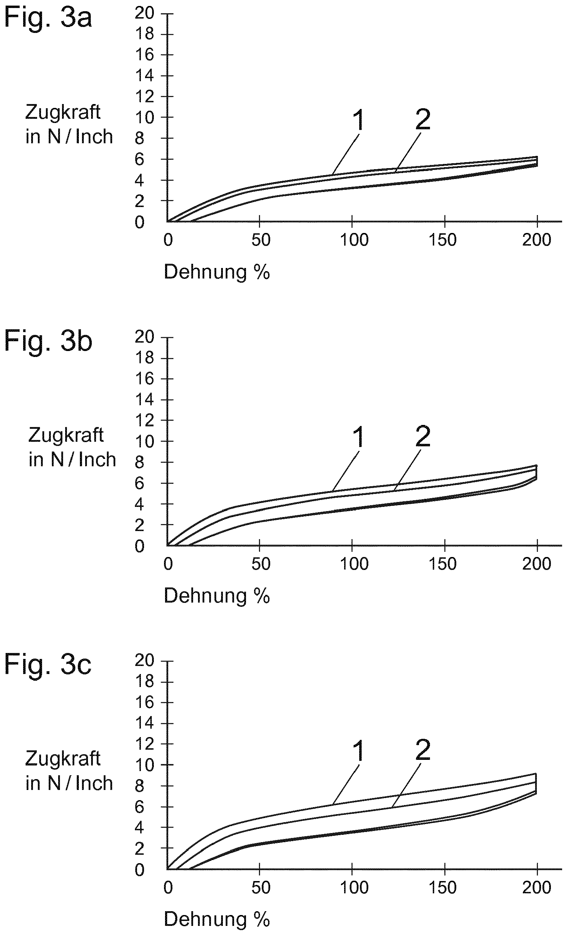

Die Figuren 3a bis 3c zeigen in der gleichen Reihenfolge das Dehnungsverhalten der Monofolie in Querrichtung (CD). Bei dem Vergleichsbeispiel gemäß der Fig. 3a mit einem Polystyrol-Anteil von 0 Gew.-% ergibt sich im Vergleich mit der Fig. 2a ein insgesamt nur wenig ausgeprägtes asymmetrisches Verhalten der Monofolie, welche sowohl in Maschinenrichtung MD als auch Querrichtung CD leicht dehnbar ist.

Während gemäß den Figuren 2b und 2c die Steifigkeit in Maschinenrichtung MD mit zunehmendem Anteil an Polystyrol deutlich ansteigt, verändern sich die in Querrichtung CD erforderlichen Zugkräfte nur wenig. Es ergibt sich lediglich ein leichter Anstieg. Die erfindungsgemäße Monofolie weist eine ausgeprägte Asymmetrie des Dehnungsverhaltens auf, wobei einerseits in Maschinenrichtung MD ausreichend Zugkräfte aufgenommen werden können und andererseits eine leichte Dehnbarkeit in Querrichtung CD verbleibt.

Die elastische Monofolie ist üblicherweise um zumindest 100%, vorzugsweise um zumindest 200% ausgehend von einer Ursprungslänge dehnbar. Bei der Entspannung der Folie nach einer ersten Dehnung verbleibt ein plastischer Anteil der Verformung, welcher auch als bleibende Dehnung oder "permanent set" bezeichnet wird. Die vorliegende Erfindung bezieht sich insbesondere auf elastische Folien, welche nach einer Dehnung um 100% eine bleibende Dehnung von weniger als 50% aufweisen. In der Regel ist die bleibende Dehnung der erfindungsgemäßen Folie deutlich geringer. So können beispielsweise bei einer Dehnung von 200% Werte der bleibenden Dehnung von weniger als 10% und insbesondere weniger als 6% erreicht werden.

## Patentansprüche

1. Elastische Monofolie mit einer Foliendicke zwischen 20 µm und 100 µm, mit einem asymmetrischen Styrol-Dien-Dreiblockcopolymer mit einem Anteil zwischen 30 Gew.-% und 90 Gew.-% als erster Polymersubstanz A und mit einer zweiten Polymersubstanz B, **dadurch gekennzeichnet, dass** als zweite Polymersubstanz B Polystyrol mit einem Anteil zwischen 8 Gew.-% und 40 Gew.-% vorgesehen ist und dass das Verhältnis der Polymersubstanz A zu der Polymersubstanz B zwischen 3:1 und 6:1 liegt.

2. Elastische Monofolie nach Anspruch 1, **dadurch gekennzeichnet, dass** die zweite Polymersubstanz B mit einem Anteil zwischen 10 Gew.-% und 20 Gew.-% vorgesehen ist.

3. Elastische Monofolie nach Anspruch 1 oder 2, **dadurch gekennzeichnet, dass** neben der ersten Polymersubstanz A und der zweiten Polymersubstanz B zumindest ein zusätzlicher Bestandteil ausgewählt aus der Gruppe Polyethylen (PE), Ethylen-Vinylacetat (EVA) Antiblockmittel, Farbpigmente, Thermostabilisatoren, UV-Absorber und Verarbeitungshilfsmittel vorgesehen ist.

4. Elastische Monofolie nach einem der Ansprüche 1 bis 3, **dadurch gekennzeichnet, dass** die Polymersubstanz A einen Schmelzindex MFI 200°C/5 kg gemäß ISO 1133 zwischen 10 und 50 aufweist.

5. Elastische Monofolie nach einem der Ansprüche 1 bis 4, **dadurch gekennzeichnet, dass** diese durch Cast-Folienextrusion gebildet ist und eine mikrophasenseparierte Struktur mit entlang einer Produktionsrichtung ausgerichteten, versteiften Domänen aufweist.

6. Elastische Monofolie nach einem der Ansprüche 1 bis 5, **dadurch gekennzeichnet, dass** das asymmetrische Styrol-Dien-Dreiblockcopolymer ein Styrol-Isopren-Styrol-Blockcopolymer ist.

7. Verfahren zur Herstellung eines Laminates für Einweg-Hygieneprodukte, insbesondere für eine Windel, mit einer elastischen Monofolie und zumindest einer Deckschicht aus Nonwoven
wobei in einem Extruder eine Polymermischung plastifiziert wird, welche zumindest ein asymmetrisches Styrol-Dien-Dreiblockcopolymer mit einem Anteil zwischen 30 Gew.-% und 90 Gew.-% als erste Polymersubstanz A und Polystyrol mit einem Anteil zwischen 8 Gew.-% und 40 Gew.-% als zweite Polymersubstanz B aufweist und das Verhältnis der Polymersubstanz A zu der Polymersubstanz B zwischen 3 : 1 und 6 : 1 liegt.
wobei die Polymermischung zur Bildung einer Monofolie durch eine Breitschlitzdüse extrudiert wird und
wobei die Monofolie mit zumindest einer Nonwovenschicht kaschiert wird.

## Claims

1. An elastic monofilm having a film thickness between 20 µm and 100 µm comprising an asymmetric styrene diene triple-block copolymer having a fraction between 30 wt.% and 90 wt.% as first polymer substance A and comprising a second polymer substance B, **characterized in that** polystyrene having a fraction between 8 wt.% and 40 wt.% is provided as second polymer substance B and that the ratio of polymer substance A to polymer substance B is between 3:1 and 6:1.

2. The elastic monofilm according to claim 1, **characterized in that** the second polymer substance B is provided with a fraction between 10 wt.% and 20 wt.%.

3. The elastic monofilm according to claim 1 or 2, **characterized in that** in addition to the first polymer substance A and the second polymer substance B at least one additional component is selected from the group polyethylene (PE), ethylene vinyl acetate (EVA), antiblocking agents, dye pigments, thermostabilizers, UV absorbers and processing adjuvants.

4. The elastic monofilm according to one of claims 1 to 3, **characterized in that** the polymer substance A has a melt index MFI 200 °C/5 kg according to ISO 1133 between 10 and 50.

5. The elastic monofilm according to one of claims 1 to 4, **characterized in that** this is formed by cast film extrusion and has a microphase-separated structure with stiffened domains aligned along a production direction.

6. The elastic monofilm according to one of claims 1 to 5, **characterized in that** the asymmetric styrene diene triple-block copolymer is a styrene isoprene styrene block copolymer.

7. A method for producing a laminate for disposable hygiene products, in particular for a nappy comprising an elastic monofilm and at least one cover layer of nonwoven
wherein a polymer mixture is plasticized in an extruder which comprises an asymmetric styrene diene triple-block copolymer having a fraction between 30 wt.% and 90 wt.% as first polymer substance A and polystyrene having a fraction between 8 wt.% and 40 wt.% as second polymer substance B, and the ratio of polymer substance A to polymer substance B is between 3:1 and 6:1,
wherein the polymer mixture is extruded through a broad-slot nozzle to form a monofilm and
wherein the monofilm is laminated with at least one nonwoven layer.

## Revendications

1. Monofilm élastique ayant une épaisseur de feuille entre 20 µm et 100 µm, comprenant un copolymère tribloc styrène-diène asymétrique avec une teneur entre 30 % en poids et 90 % en poids en tant que première substance polymère A et avec une seconde substance polymère B, **caractérisé en ce que** du polystyrène avec une teneur entre 8 % en poids et 40 % en poids est prévu en tant que seconde substance polymère B et que le rapport de la substance polymère A à la substance polymère B est situé entre 3:1 et 6:1.

2. Monofilm élastique selon la revendication 1, **caractérisé en ce que** la seconde substance polymère B est prévue avec une teneur entre 10 % en poids et 20 % en poids.

3. Monofilm élastique selon la revendication 1 ou 2, **caractérisé en ce qu'**au moins une composante supplémentaire sélectionnée parmi le groupe du polyéthylène (PE), de l'éthylène-acétate de vinyle (EVA), des agents anti-bloc, des pigments colorés, des thermostabilisateurs, des absorbeurs d'UV et des adjuvants de traitement est prévue en plus de la première substance polymère A et de la seconde substance polymère B.

4. Monofilm élastique selon l'une des revendications 1 à 3, **caractérisé en ce que** la substance polymère A présente un indice de fusion MFI de 200 °C/5 kg selon la norme ISO 1133 entre 10 et 50.

5. Monofilm élastique selon l'une des revendications 1 à 4, **caractérisé en ce que** celui-ci est formé par extrusion de film coulé et présente une structure séparée par microphases avec des domaines rigidifiés alignés le long d'un sens de production.

6. Monofilm élastique selon l'une des revendications 1 à 5, **caractérisé en ce que** le copolymère tribloc styrène-diène asymétrique est un copolymère bloc styrène-isoprène-styrène.

7. Procédé de fabrication d'un stratifié pour un produit d'hygiène à usage unique, en particulier pour une couche-culotte, comprenant un monofilm élastique et au moins une couche supérieure en non-tissé
dans lequel un mélange de polymère est plastifié dans une extrudeuse, lequel présente au moins un copolymère tribloc styrène-diène asymétrique avec une teneur entre 30 % en poids et 90 % en poids en tant que première substance polymère A et du polystyrène avec une teneur entre 8 % en poids et 40 % en poids en tant que seconde substance polymère B et le rapport de la substance polymère A à la substance polymère B est situé entre 3:1 et 6:1,
dans lequel le mélange de polymère est extrudé par une buse à fente large pour former un monofilm et
dans lequel le monofilm est pelliculé avec au moins une couche de non-tissé.
